(19) Europäisches Patentamt
European Patent Office
Office européen des brevets

(11) Veröffentlichungsnummer: **0 043 965**
**B1**

# (12) EUROPÄISCHE PATENTSCHRIFT

(45) Veröffentlichungstag der Patentschrift: **12.09.84**

(51) Int. Cl.³: **C 08 L 27/06**, B 29 C 24/00

(21) Anmeldenummer: **81104996.4**

(22) Anmeldetag: **27.06.81**

(54) **Verfahren zur Herstellung von Prägungen mit verstärktem Weissbrucheffekt in Folien von Vinylchloridpolymerisaten.**

(30) Priorität: **01.07.80 DE 3024811**

(43) Veröffentlichungstag der Anmeldung:
**20.01.82 Patentblatt 82/3**

(45) Bekanntmachung des Hinweises auf die Patenterteilung:
**12.09.84 Patentblatt 84/37**

(84) Benannte Vertragsstaaten:
**AT BE CH DE FR GB IT LI NL**

(56) Entgegenhaltungen:
**DE - B - 2 547 612**
**FR - A - 2 325 672**
**US - A - 3 428 707**

(73) Patentinhaber: **HOECHST AKTIENGESELLSCHAFT, Postfach 80 03 20, D-6230 Frankfurt am Main 80 (DE)**

(72) Erfinder: **Mücke, Rainer, Dr., Kanalstrasse 3, D-8261 Burgkirchen/Alz (DE)**
Erfinder: **Schiller, Johann, Mittling 25 1/6, D-8262 Neuötting (DE)**

**EP 0 043 965 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Verfahren zur Herstellung von Prägungen mit verstärktem Weissbruchеffekt in Folien von Vinylchloridpolymerisaten.

Es ist bekannt, dass Formkörper, beispielsweise Folien aus Formmassen, bestehend im wesentlichen aus Vinylchloridpolymerisaten als Hauptbestandteil und Elastomeren, wie beispielsweise Acrylnitril-Butadien-Styrol (ABS)-, Methylmethacrylat-Butadien-Styrol (MBS)- oder Methylmethacrylat-Acrylnitril-Butadien-Styrol (MABS)- Harzen, in einer Menge von bis zu etwa 20 Gew.-%, bezogen auf Gesamtmischung, Weissbrucheigenschaften aufweisen (vergleiche Zeitschrift «Plaste und Kautschuk», 1972, Heft 4, Seiten 255 bis 259). Die Ursache des Weissbruchs solcher Folien, in denen die Elastomerkomponente als disperse Phase (Elastphase) im Vinylchloridpolymerisat (Hartphase) vorliegt und der Durchmesser der Elastomerteilchen mindestens 0,01 µm beträgt, ist noch nicht völlig geklärt. Es wird allgemein angenommen, dass Weissbruch durch Bildung von Fehlstellen (Mikrorisse, Crazes) in der Folie als Folge einer Deformation (Dehnung) der Folie über die Streckgrenze hinaus (derartige Deformationen treten beispielsweise bei der Anbringung von Schriftzeichen durch Prägung ein) und durch Änderung der Doppelbrechung des Lichtes in den Fehlstellen hervorgerufen wird (vergleiche zitierte Zeitschrift, Seite 256, rechte Spalte in Verbindung mit Seite 258, linke Spalte).

Nun reicht jedoch der durch den Weissbruch bedingte Kontrast, den Folien aus den eingangs genannten Formmassen aus Vinylchloridpolymerisation und Elastomeren nach der Deformation von sich aus aufweisen, nicht aus, wenn diese Folien beispielsweise zur Anbringung von Schriftzeichen durch Prägung eingesetzt werden sollen. In diesem Falle wird nämlich ein weit stärkerer und insbesondere kontrastreicherer Weissbruch verlangt.

Aus der amerikanischen Patentschrift 2 925 625 ist es bekannt, dass sich Formmassen aus Vinylchloridpolymerisaten, Stabilisatoren, Gleitmitteln, Farbstoffen und einem anorganischen Zusatz oder einem mit Vinylchloridpolymerisaten unverträglichen Weichmacher (Extender-Weichmacher) zu Formkörpern verarbeiten, beispielsweise zu Folien kalandrieren oder extrudieren lassen, die Weissbrucheigenschaften aufweisen (Weissbruchfolien). An diesen Folien lassen sich also durch Kaltverformung Prägungen in einem kontrastierenden weissen Farbton anbringen, beispielsweise Schriftbilder mittels des im Handel erhältlichen Prägegeräts «Dymo Mite» Tapewriter ® Modell 2 der Firma Dymo Industries Inc., Berkeley, Calif., USA. Dabei ist jedoch nachteilig, dass die zur Erzeugung des Weissbruchs notwendigen anorganischen Zusätze oder unverträglichen Weichmacher die Folien trüben, was den Kontrast des Weissbruchs mindert. Zudem sind diese Formmassen schwer zu verarbeiten und die erhaltenen Folien sind wenig flexibel.

In der deutschen Patentschrift 1 804 049 werden spezielle Emulsionspfropfpolymerisate aus Vinylchlorid und einem Mischpolymerisat aus Butadien, Styrol und Acrylaten oder Methacrylaten zur Herstellung von Folien mit Weissbrucheffekt beschrieben. Der Weissbruch, den diese Folien durch Prägung erhalten, entspricht jedoch ebenfalls nicht ganz den gestellten Forderungen hinsichtlich eines guten Kontrastwertes.

Aus der deutschen Patentschrift 25 47 612 ist es schliesslich bekannt, Formmassen, bestehend aus a) einem Vinylchloridpolymerisat als Hauptbestandteil, b) einem Elastomeren aus der Gruppe der ABS-, MBS- und/oder MABS-Polymeren in einer Menge von 5 bis 25 Gew.-%, bezogen auf Gesamtmischung, c) einem mit dem Vinylchloridpolymerisat verträglichen Weichmacher in einer Menge von 3 bis 10 Gew.-%, bezogen auf Gesamtmischung, und d) üblichen Stabilisatoren, Gleitmitteln und anderen zweckmässigen Additiven, zur Herstellung von Formkörpern, insbesondere Folien, für die Anbringung von Prägungen unter Ausnutzung des Weissbruchеffektes zu verwenden. Diese Folien besitzen den Nachteil, dass insbesondere die Temperaturbeständigkeit des Weissbruchs zu wünschen übrig lässt.

Aufgabe der Erfindung ist es daher, Formmassen auf der Basis von Vinylchloridpolymerisaten zu schaffen, mit denen Formkörper, insbesondere Folien, erhalten werden, die einen besonders stark kontrastierenden, in klaren Konturen hervortretenden und einen auch noch bei relativ hohen Temperaturen beständigen Weissbruch aufweisen. Die Formmassen sollen darüber hinaus nach dem Kalander- oder Extruderverfahren ohne Schwierigkeiten und leicht verarbeitbar sein und Formkörper liefern, die auch diejenigen physikalischen Eigenschaften, wie Steifigkeit, Elastizität Zugfestigkeit, Zähigkeit und möglichst geringe Materialtrübung (Klarheit) besitzen, welche für Weissbruchfolien (die insbesondere zur Herstellung von Etiketten, Schildern und Verpackungsmaterialien eingesetzt werden) erwünscht sind.

Diese Aufgabe wird im Rahmen des eingangs genannten Verfahrens erfindungsgemäss dadurch gelöst, dass eine Folie eingesetzt wird, die aus einer Formmasse bestehend im wesentlichen aus:
A) mindestens einem Vinylchloridpolymerisat als Hauptbestandteil, und
B) mindestens einem festen Polyorganosiloxan, das einen Schmelzpunkt von nicht über 200 °C besitzt, und/oder mindestens einem flüssigen Polyorganosiloxan, das eine als Gewichtsverlust angegebene Flüchtigkeit von nicht mehr als 2,5 Gew.-%, nach einem 15 Minuten langen Erhitzen bei 230 °C und Normaldruck besitzt, wobei die Menge der Komponente B) 0,05 bis 1,5 Gew.-%, bezogen auf das Gesamtgewicht der Formmasse, beträgt, gebildet worden ist.

Erfindungsgemäss werden also zur Erzielung von Weissbruch bei Vinylchloridpolymerisaten feste und/oder flüssige Polyorganosiloxane eingesetzt. Ihre chemische Struktur kann in weiten Grenzen variieren, sie ist an sich nicht kritisch. Für den Erfolg des erfindungsgemässen Vorschlags

ist es lediglich wichtig, dass die festen Polyorganosiloxane bei der Verarbeitungstemperatur der erfindungsgemässen Formmassen aufschmelzen, und die flüssigen Polyorganosiloxane eine nicht zu hohe Flüchtigkeit aufweisen und damit in nicht wesentlicher Menge während der Verarbeitung aus der Formmasse wegdampfen. Da die Verarbeitung der Formmassen bei einer Temperatur bis zu etwa 200 bis 230 °C erfolgt, sollen die festen Polyorganosiloxane einen Schmelzpunkt von gleich oder kleiner 200 °C aufweisen und die flüssigen eine Flüchtigkeit – angegeben als Gewichtsverlust in Gewichtsprozenten – von nicht mehr als 2,5 Gew.-% (bezogen auf das Gewicht der zur Messung der Flüchtigkeit eingesetzten Menge an flüssigem Polyorganosiloxan).

Die festen Polyorganosiloxane besitzen einen Schmelzpunkt im Temperaturbereich von vorzugsweise 60 bis 160 °C, insbesondere von 80 bis 140 °C.

Die flüssigen Polyorganosiloxane besitzen eine als Gewichtsverlust ausgedrückte Flüchtigkeit von vorzugsweise nicht mehr als 2,0 Gew.-%, insbesondere von nicht mehr als 1,5 Gew.-% (bezogen auf das Gewicht der zur Flüchtigkeitsmessung eingesetzten Menge an flüssigem Polyorganosiloxan) nach einem 15 Minuten langen Erhitzen bei 230 °C und Normaldruck.

Ebenso wie die erfindungsgemäss zu verwendenden festen Polyorganosiloxane mit der Angabe des Schmelzpunktes eindeutig definiert sind, sind die flüssigen Polyorganosiloxane bereits mit der angegebenen Flüchtigkeit eindeutig charakterisiert (vgl. Lehrbuch über «Chemie und Technologie der Silicone» von Walter Noll, Verlag Chemie GmbH, Weinheim, BR-Deutschland).

Unter den erfingunsgemäss einzusetzenden flüssigen Polyorganosiloxanen sind solche bevorzugt, die neben dem angegebenen Parameter

a) Flüchtigkeit noch die weiteren folgenden physikalischen Paramter aufweisen:

b) einen Brechungsindex bei 25 °C von 1,375 bis 1,500, vorzugsweise von 1,400 bis 1,470,

c) eine Dichte bei 25 °C von 0,760 bis 1,150 g/cm$^3$, vorzugsweise von 0,900 bis 1,150 g/cm$^3$, und

d) eine Viskosität bei 25 °C von 0,5 bis 500 000 mm$^2$/s, vorzugsweise von 10 bis 50 000, insbesondere von 20 bis 5000 mm$^2$/s.

Die Menge an festen und/oder flüssigen Polyorganosiloxanen in den erfindungsgemässen Formmassen beträgt vorzugsweise 0,1 bis 1,0 Gew.-%, bezogen auf das Gesamtgewicht der Formmasse.

Polyorganosiloxane sind Verbindungen von Silicium, in denen das Silicium-Atom an eine, zwei oder drei Organogruppen gebunden ist und sich die restlichen Valenzen über Sauerstoff betätigen (vergleiche oben näher bezeichnetes Lehrbuch über «Chemie und Technologie der Silicone»). Danach gibt es drei aus Silicium, Sauerstoff und organischen Resten aufgebaute Gruppen, die als Siloxaneinheiten der Polymeren bezeichnet werden. Sie gehören in eine Reihe, an deren Anfang die nur aus Silicium und Sauerstoff, an deren Ende die nur aus Silicium und Kohlenwasserstoff-Resten gebildete Gruppierung steht:

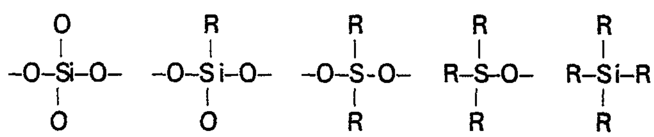

Die Gruppe $[SiO4]^{4-}$ ist die Baueinheit, aus der sich die Netzwerke der Siliciumdioxid-Modifikationen und der Silicate aufbauen; $R_4Si$ hat Molekülcharakter und ist eine rein siliciumorganische Verbindung. Die Bausteine der Polyorganosiloxane (Siliconpolymeren) liegen zwischen diesen Polen.

Die Zusammensetzung einer Siloxaneinheit ergibt sich unter Berücksichtigung der Tatsache, dass jedes Sauerstoffatom als Brückenbildner zwischen je zwei Siliciumatomen fungiert und demgemäss jedem Siliciumatom nur zur Hälfte zuzurechnen ist; die allgemeine Zusammensetzung aller Glieder der obengenannten Reihe ist also

$$R_aSiO_{\frac{4-a}{2}}$$

wobei bezüglich der eigentlichen Polyorganosiloxane R für einen Kohlenwasserstoffrest und a für eine Zahl von 1 bis 3 steht.

Die erfindungsgemäss einzusetzenden festen Polyorganosiloxane bestehen aus Siloxan-Einheiten der Formel I

$$R_b^1SiO_{\frac{4-b}{2}} \qquad I$$

worin $R^1$ vorzugsweise $CH_3$, und b vorzugsweise 1 ist. Die bevorzugten festen Polyorganosiloxane sind demnach aus $CH_3SiO_{3/2}$-Einheiten aufgebaut.

Die erfindungsgemäss einzusetzenden flüssigen Polyorganosiloxane bestehen aus Siloxan-Einheiten der Formel II

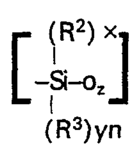 II

worin bedeuten:

$R^2$ und $R^3$, die gleich oder verschieden sein können, einen Kohlenwasserstoff-Rest,

n eine ganze Zahl von 5 bis 2000, vorzugsweise von 20 bis 1500,

$z = \frac{4-x-y}{2}$, und die Summe der Indices x und y eine Zahl von 1 bis 2.1.

Die Substituenten $R^2$ und $R^3$ bedeuten vorzugsweise eine

Alkylgruppe mit 1 bis 18, vorzugsweise mit 1 bis 12, insbesondere mit 1 bis 3 C-Atomen; die Alkylgruppe kann auch substituiert sein, vorzugsweise mit Chlor,

Alkenylgruppe mit 2 bis 18, vorzugsweise 2 bis 12 insbesondere 2 bis 4 C-Atomen; die Alkenylgruppe kann auch substituiert sein, vorzugsweise mit Chlor,

Cycloalkylgruppe, vorzugsweise Cyclopentyl oder Cyclohexyl,

Arylgruppe, vorzugsweise Phenyl, das auch substituiert sein kann, vorzugsweise mit Chlor,

Alkarylgruppe, wobei der Phenylrest mit einer oder mehreren Alkylgruppen mit jeweils vorzugsweise 1 bis 4 C-Atomen oder mit Halogen substituiert sein kann, vorzugsweise Tolyl, Xylyl oder Ethylphenyl,

Aralkylgruppe aus einem Alkylenrest mit vorzugsweise 1 bis 4 C-Atomen und einem gegebenenfalls stubstituierten Phenylrest, vorzugsweise Benzyl oder Phenylethyl,

Cyanoalkylgruppe,

Aminoalkylgruppe, oder eine Hydroxyalkylgruppe. Von den genannten Substituenten $R^2$ und $R^3$ sind besonders bevorzugt die Alkylgruppen, Arylgruppen, Aminoalkylgruppen und die Hydroxyalkylgruppen.

Die vorgeschlagenen Polyorganosiloxane sind an sich bekannt und im Handel erhältlich, beispielsweise von der Firma Wacker-Chemie GmbH, Burghausen, Bayern, BR-Deutschland.

Die erfindungsgemässen Formmassen aus A) Vinylchloridpolymerisaten und B) den vorgeschlagenen festen und/oder flüssigen Polyorganosiloxanen besitzen bereits einen unerwartet hohen Weissbruch. Dieser kann noch weiter gesteigert werden, wenn zusätzlich noch C) Elastomere zugemischt werden.

Die Menge an Elastomeren beträgt im allgemeinen 1 bis 20, vorzugsweise 2 bis 11 Gew.-%, bezogen auf das Gesamtgewicht der Formmasse.

Wie eingangs erwähnt, rufen zahlreiche Elastomere, die üblicherweise zur Schlagzähmodifizierung von Vinylchloridpolymerisaten eingesetzt werden und im Vinylchloridpolymerisat als dispers verteilte Partikelchen mit einem Durchmesser von mindestens 0,01 µm vorliegen, einen mehr oder weniger starken Weissbrucheffekt hervor. Gemäss Erfindung kommen nun im Prinzip alle diese Elastomeren in Betracht, deren Teilchengrösse (Teilchendurchmesser) in der Elastphase grösser als 0,01 µm, vorzugsweise 0,1 bis 10 µm, insbesondere 01 bis 1 µm ist.

Vorzugsweise werden Elastomere aus der Gruppe der Acrylnitril-Butadien-Styrol-, Methylmethacrylat-Butadien-Styrol-, Methylmethacrylat-Acrylnitril-Butadien-Styrol- Methylmethacrylat-Styrol-, Styrol-Butadien-Styrol (SBS)- und Methylmethacrylat-Polymeren eingesetzt.

Die ABS-, MBS-, MABS- und SBS-Polymeren weisen einen Butadiengehalt von jeweils vorzugsweise mindestens 35 Gew.-%, bezogen auf das Gesamtpolymerisat auf. Der Durchmesser der Elastomerteilchen in der Elastphase beträgt vorzugsweise 0,1 bis 10 µm, insbesondere 0,1 bis 1 µm.

Als besonders geeignet erwiesen haben sich ABS-Polymere, deren Gehalt an Butadien 40 bis 70 Gew.-%, an Styrol 20 bis 40 Gew.-% und an Acrylnitril 10 bis 25 Gew.-%, jeweils bezogen auf das Gesamtpolymerisat, beträgt; MBS-Polymere, deren Gehalt an Butadien 35 bis 45 Gew.-%, an Styrol 10 bis 20 Gew.-% und an Methylmethacrylat 40 bis 55 Gew.-%, jeweils bezogen auf das Gesamtpolymerisat, beträgt; MABS-Polymere, deren Gehalt an Butadien 40 bis 60 Gew.-%, an Styrol 20 bis 35 Gew.-%, an Methylmethacrylat 15 bis 30 Gew.-% und an Acrylnitril weniger als 10 Gew.-%, jeweils bezogen auf das Gesamtpolymerisat, beträgt; SBS-Polymere, deren Gehalt an Butadien 35 bis 70 Gew.-% und an Styrol 30 bis 65 Gew.-%, jeweils bezogen auf das Gesamtpolymerisat beträgt; und Methylmethacrylat- Styrol-Polymere, deren Gehalt an Methylmethacrylat 45 Gew.-% und an Styrol 55 Gew.-%, jeweils bezogen auf das Gesamtpolymerisat, beträgt.

Die Herstellung dieser Elastomeren erfolgt zweckmässigerweise nach dem bekannten Zweistufen-Pfropfpolymerisationsverfahren in wässriger Emulsion.

Es war überraschend, dass mit festen oder flüssigen Polyorganosiloxanen in Vinylchloridpolymerisaten Weissbrucheffekt erreicht werden kann. Eine physikalische Erklärung für den unerwartet hohen Weissbruch der erfindungsgemässen Formmassen kann nicht gegeben werden. Offensichtlich resultieren aus der Zumischung von Polyorganosiloxanen zu Vinylchloridpolymerisaten jene eingangs genannten physikalischen Bedingungen, die Weissbruch verursachen können. Besonders ausgeprägt ist der Weissbrucheffekt bei den erfindungsgemässen Formmassen aus Vinylchloridpolymerisaten, Polyorganosiloxanen und Elastomeren. Hier muss offensichtlich eine unerwartet hohe synergistische Wirkung vorhanden sein zwischen den Polyorganosiloxanen und den – wie eingangs erwähnt – in Vinylchloridpolymerisaten bereits von sich aus Weissbruch auslösenden Elastomeren.

Die Art der erfindungsgemäss einzusetzenden Vinylchloridpolymerisate ist nicht kritisch. In Betracht kommen Homopolymerisate, Copolymerisate oder Pfropfpolymerisate des Vinylchlorids. In den Co- und Pfropfpolymerisaten beträgt der Gehalt an polymerisiertem Vinylchlorid in der Regel mindestens 50 Gew.-%, vorzugsweise mindestens 85 Gew.-%, bezogen auf das Polymerisat.

Zur Copolymerisation von Vinylchlorid sind beispielsweise folgende Monomere geeignet: Olefine, wie Ethylen oder Propylen; Vinylester von geradkettigen oder verzweigten Carbonsäuren mit 2 bis 20, vorzugsweise 2 bis 4 Kohlenstoffatomen, wie Vinylacetat, Vinylpropionat, Vinylbutyrat oder Vinylstearat; Vinylhalogenide, wie Vinylfluorid, Vinylidenfluorid oder Vinylidenchlorid;

Vinylether; ungesättigte Säuren, wie Malein-, Fumar-, Acryl-, Methacrylsäure und deren Mono- oder Diester mit Mono- oder Dialkoholen mit 1 bis 10 Kohlenstoffatomen; Acrylnitril; Styrol; und Cyclohexylmaleinimid.

Zur Pfropfpolymerisation können beispielsweise elastomere Polymerisate verwendet werden, die durch Polymerisation von einem oder mehreren folgender Monomerer erhalten werden: Diene, wie Butadien oder Cyclopentadien; Olefine wie Ethylen oder Propylen; Styrol; ungesättigte Säuren, wie Acryl- oder Methacrylsäure und deren Ester mit Mono- oder Dialkoholen mit 1 bis 10 Kohlenstoffatomen; Acrylnitril; Vinylverbindungen, wie Vinylester von Carbonsäuren mit 2 bis 20, vorzugsweise mit 2 bis 4 Kohlenstoffatomen.

Bevorzugte Vinylchloridpolymerisate sind Homopolymerisate des Vinylchlorids, Copolymerisate mit einem Gehalt von mindestens 85 Gew.-% an polymerisiertem Vinylchlorid oder Pfropfcopolymerisate des Vinylchlorids mit einem Gehalt von mindestens 85 Gew.-% an polymerisiertem Vinylchlorid, wobei das Copolymere, auf das Vinylchlorid aufgepfropft ist, aus Butadien, Isopren oder höher konjugierten Dienen und Acrylnitril, Styrol, Butylacrylat oder Methylmethacrylat, vorzugsweise aus Butadien und Acrylnitril im Gewichtsverhältnis von 90 zu 10, besteht. Die K-Werte (DIN 53 726) der Vinylchlorid-Homo-, -Co oder -Pfropfpolymerisate betragen zweckmässigerweise 50 bis 80, vorzugsweise 55 bis 70.

Die erfindungsgemäss einzusetzenden Mischungen aus A) Vinylchloridpolymerisaten und B) festen und/oder flüssigen Polyorganosiloxanen, oder aus A), B) und C) Elastomeren enthalten zweckmässigerweise auch die für die Verarbeitung von Vinylchloridpolymerisaten vorteilhaften Hilfsstoffe, vorzugsweise Wärmestabilisatoren und Gleitmittel. Sie können auch noch besondere Additive, beispielsweise antistatisch wirkende Substanzen, enthalten.

Als Wärmestabilisatoren sind beispielsweise geeignet Mono- und Dialkyl-Zinnverbindungen mit 1 bis 10 C-Atomen im Alkylrest, bei denen die restlichen Wertigkeiten des Zinns über Sauerstoff und/oder Schwefelatome mit weiteren Substituenten verbunden sind; Aminocrotonsäureester; Harnstoff- und Thioharnstoffderivate, beispielsweise Monophenylharnstoff und Diphenylharnstoff; α-Phenylindol; Salze der Erdalkalimetalle, des Zinks, Bariums, Cadmiums oder Bleis mit aliphatischen Carbonsäuren, Oxycarbonsäuren oder mit, gegebenenfalls alkylierten, aromatischen Hydroxyverbindungen; basische oder neutrale Bleisalze anorganischer Säuren, beispielsweise der Schwefel-, Phosphor- oder phosphorigen Säure. Bevorzugt verwendet werden die Organozinnschwefel-Stabilisatoren, beispielsweise Di-methylzinn-bis-2-ethylhexylthioglykolat, Di-n-butylzinn-bis-2-ethylhexylthioglykolat, Di-n-octylzinn-bis-2-ethylhexylthioglykolat.

Die Stabilisatoren werden in einer Menge von 0,5 bis 3,0 Gew.-%, vorzugsweise 0,8 bis 2,0 Gew.-%, bezogen auf das Gesamtgewicht der Formmasse, eingesetzt.

Zusätzlich zu den Stabilisatoren können auch noch übliche Costabilisatoren und/oder Antioxidantien eingesetzt werden, beispielsweise epoxidiertes Sojabohnenöl, alkylsubstituierte Hydroxylverbindungen, wie Di-tert.-butylparakresol, Dibutylhydroxynaphtalin oder tert.-Butylhydroxyanisol; und Organophosphorigsäureester, wie Tris-(mono- oder di-)nonylphenylphosphite. Die wirksame Menge an Costabilisatoren und Antioxidantien liegt im allgemeinen bei jeweils 0,05 bis 2,0 Gew.-%, bezogen auf das Gesamtgewicht der Formmasse.

Zur Verbesserung der Lichtbeständigkeit können ultraviolettes Licht absorbierende Substanzen, beispielsweise Benzophenon- oder Benztriazol-Derivate, wie 2-(2-Hydroxy-5-methylphenyl)-benztriazol oder 2-(2'Hydroxy-3'-tert.-butyl-5'-methylphenyl)-5-chlor-benztriazol in einer Menge von 0,05 bis 2 Gew.-%, bezogen auf das Gesamtgewicht der Formmasse, zugegeben werden.

Als Gleitmittel kommen beispielsweise die folgenden Verbindungen in Betracht: höhere aliphatische Carbonsäuren oder Oxycarbonsäuren, deren Alkali- oder Erdalkalisalze, deren Ester oder deren Amide, beispielsweise Stearinsäure, Montansäure, Glycerinmonooleat, Bis-stearyl- oder Bis-palmitoyl-ethylendiamin, Montansäureester von Ethandiol oder 1,3-Butandiol, gegebenenfalls teilweise verseift; Fettalkohole mit mehr als 10 C-Atomen und deren Alkylether; niedermolekulare Polyolefine, und Hartparaffine. Vorteilhafte Gleitmittel sind Wachs OP, ein 1,3-Butandiolmontansäureester gekälkt, so dass etwa 40 Gew.-% der zur Kälkung eingesetzten Montansäure als Calciumsalz, vorliegen, Wachs E, ein 1,3-Butandiolmontansäureester, Stearinsäure und Bis-stearylethylendiamin.

Der Anteil an Gleitmittel in den Formmassen beträgt 0,1 bis 2,5 Gew.-%, vorzugsweise 0,5 bis 1,5 Gew.-%, bezogen auf das Gesamtgewicht der Formmassen.

Als Additive mit antistatischer Wirkung können beispielsweise die bei Vinylchloridpolymerisaten üblichen quaternären Ammoniumsalze in einer Menge von etwa 0,05 bis 1,0 Gew.-%, bezogen auf das Gesamtgewicht der Formmasse, eingesetzt werden.

Bevorzugte erfindungsgemäss einzusetzende Formmassen bestehen im wesentlichen aus

A) 73 bis 98,35 Gew.-%, vorzugsweise 83,5 bis 96,6 Gew.-%, von mindestens einem Vinylchloridpolymerisat,

B) 0,05 bis 1,5 Gew.-%, vorzugsweise 0,1 bis 1,0 Gew.-%, von mindestens einem festen und/oder flüssigen Polyorganosiloxan,

C) 1,0 bis 20,0 Gew.-%, vorzugsweise 2,0 bis 11,0 Gew.-%, von mindestens einem Elastomeren aus der Gruppe der Acrylnitril-Butadien-Styrol-, Methylmethacrylat-Butadien-Styrol-, Methylmethacrylat-Acrylnitril-Butadien-Styrol, Methylmethacrylat-Styrol- und Methylmethacrylat-Polymeren,

D) 0,5 bis 3,0 Gew.-%, vorzugsweise 0,8 bis 2,0 Gew.-%, von mindestens einem Wärmestabilisator für Vinylchloridpolymerisate, und

E) 0,1 bis 2,5 Gew.-%, vorzugsweise 0,5 bis 1,5 Gew.-%, von mindestens einem Gleitmittel für Vinylchloridpolymerisate, Gewichtsprozent jeweils bezogen auf das Gesamtgewicht der Formmasse.

Die Verarbeitung der erfindungsgemäss einzusetzenden Formmassen zu Formkörpern erfolgt nach den für Vinylchloridpolymerisate bekannten Verarbeitungsverfahren. Im Falle der Herstellung von Folien werden die einzelnen Mischungskomponenten in einer üblichen Mischvorrichtung, beispielsweise in einem Schnellmischer, gemischt und auf einem Extruder oder Kalander bei Arbeitstemperaturen von 80 bis 230 °C, vorzugsweise von 150 bis 220 °C, zu einer Folie verarbeitet, wobei die Dicke der Folie in der Regel 50 bis 700 µm, vorzugsweise 100 bis 400 µm, beträgt. Die Kalandrierung der zweckmässigerweise in einem Kneter oder einem Walzwerk vorgelierten Mischung erfolgt vorzugsweise auf einem Vier- oder Fünf-Walzenkalander nach dem Hochtemperaturverfahren, wobei die Walzen im allgemeinen auf eine Temperatur von 190 bis 210 °C erhitzt sind. Die kalandrierte Folie wird von der letzten Kalanderwalze abgezogen, mit Hilfe von Kühlwalzen abgekühlt und in der Regel einer Aufwickeleinrichtung zugeführt.

Die erfindungsgemäss einzusetzenden Formmassen liefern Formkörper, vorzugsweise Folien, die bei der Anbringung von Prägungen, zum Beispiel Schriftzeichen, hervorragende Weissbruchwerte aufweisen. Sie besitzen einen hohen Weissbruchradius und einen hohen, in klaren Konturen hervortretenden Kontrastwert. Dieser Weissbruch bleibt in voller Stärke auch bei höheren Temperaturen, denen die geprägten Formkörper ausgesetzt sein können, erhalten.

Die erfindungsgemäss einzusetzenden Formmassen weisen einen derart starken Weissbrucheffekt auf, dass auch beim Inkorporieren von anorganischen oder organischen Buntpigmenten, Weisspigmenten und Füllstoffen, wie Kaolin, Kieselsäure, Kreide, Titandioxid, Azofarbstoffpigmenten, Thioindigopigmenten und Kupferphtalocyaninen, also auch bei gedeckten (gefärbten) Folien ein kontrastreiches Prägebild vorliegt.

Darüber hinaus zeichnen sich die aus den erfindungsgemäss eingesetzten Formmassen hergestellten Formkörper, insbesondere Folien, durch eine Reihe von weiteren Eigenschaften aus, die bei Weissbruchfolien gewünscht oder teilweise sogar gefordert werden. So besitzen sie relativ hohe Werte an Zugfestigkeit und Schlagzugzähigkeit.

Auch hinsichtlich Flexibilität (Elastizitätsmodul) einerseits und Steifigkeit (Steifigkeitsmodul) andererseits zeigen sie weitgehend die gewünschten Werte. Weissbruchfolien sollen nämlich auch bei geringen Dicken eine relativ hohe Steifigkeit besitzen; sie sollen aber auch relativ flexibel sein, damit sie beispielsweise einem unebenen Untergrund oder kantigen oder gerundeten Gegenständen angepasst werden können, ohne dass dabei nachteilige Erscheinungen auftreten. Aufgrund der unerwartet hohen synergistischen Wirkung der erfindungsgemäss vorgeschlagenen Polyorganosiloxane hinsichtlich Weissbruch in Vinylchloridpolymerisaten und insbesondere in Mischungen aus Vinylchloridpolymerisaten und Elastomeren, ist es bei den erfindungsgemässen Formmassen möglich, den Elastomeranteil (im Vergleich zu den in den deutschen Patentschriften 18 04 049 und 25 47 612 beschriebenen Formmassen) relativ klein zu halten. Auch ist der Anteil an flüssigen Komponenten in den erfindungsgemässen Formmassen – verglichen mit den in der deutschen Patentschrift 25 47 612 beschriebenen, die neben flüssigen Gleitmitteln auch noch bis zu 10 Gew.-% Weichmacher enthalten – relativ klein.

Aus diesen Merkmalen der erfindungsgemäss einzusetzenden Formmassen resultieren die vorteilhaften Werte hinsichtlich Steifigkeit und Flexibilität. Mit hohen Anteilen an flüssigen Komponenten wird nämlich die Flexibilität verschlechtert und mit hohen Anteilen an Elastomeren die Steifigkeit. Bei hohen Anteilen an flüssigen Komponenten besteht ferner die Gefahr einer Trübung der Formkörper, insbesondere dann, wenn sie höheren Temperaturen ausgesetzt sind. Die erfindungsgemässen Formmassen sind also aufgrund des Einsatzes von Polyorganosiloxanen frei von diesen Nachteilen.

Die neuen Weissbruchfolien zeigen auch hinsichtlich Wasseraufnahme und Transparenz besonders gute Werte. Sie besitzen eine hohe Klarheit und behalten sie auch bei höheren Temperaturen und hoher relativer Luftfeuchtigkeit weitgehend bei. Wenn eine mattierte Oberfläche erwünscht sein sollte, kann eine solche beispielsweise mit Hilfe von zwei oberflächlich strukturierten Kalanderauslaufwalzen oder in einem dem Kalander nachgeschalteten Prägewerk erhalten werden.

Die erfindungsgemäss einzusetzenden Formmassen zeichnen sich darüberhinaus auch durch ihre leichte Verarbeitbarkeit, vorzugsweise beim Kalandrieren oder Extrudiren, aus. Sie lassen sich beispielsweise ohne Schwierigkeiten auch mit relativ hoher Geschwindigkeit kalandrieren.

Die Erfindung wird nun anhand von Vergleichsbeispielen und erfindungsgemässen Beispielen noch näher erläutert.

Die physikalischen Eigenschaften und Angaben zur chemischen Struktur der in den Beispielen verwendten Polyorganosiloxane sind in der Tabelle I zusammengefasst.

Die in den Beispielen angeführten Komponenten wurden in einem üblichen Schnellmischer gemischt, in einem Kneter bei einer Temperatur von etwa 140 °C vorgeliert und auf einem Vier-Walzenkalander, dessen Walzen (in Folienlaufrichtung) auf 190 °C, 195 °C, 200 °C und 210 °C erhitzt sind, zu Folien gleicher Dicke – jeweils 200 µm – verarbeitet.

An den Folien wurde 1. der Kontrastwert, 2. der Weissbruchradius, 3. die Wärmebeständigkeit, 4. die Trübungszahl, 5. die Trübungszahl nach einer

8 Tage dauernden Lagerung der Folie bei 65 °C und 95% relativer Luftfeuchtigkeit, 6. die Zugfestigkeit, 7. die Schlagzugzähigkeit, 8. der Elastizitätsmodul und 9. die Steifigkeit gemessen. Die Messung dieser Eigenschaften erfolgte nach den folgenden Methoden:

1. Kontrastwerkt (in Noten 0 bis 4): Von den Folien wurden etwa 10 bis 20 mm breite und etwa 250 mm lange Streifen abgeschnitten. Die einzelnen Streifen wurden auf einer Seite schwarz lackiert (beispielsweise mit Flexoschwarz 85 EG 118-1 der Firma Gebrüder Schmidt GmbH, Frankfurt-Rödelheim) und nach Trocknung des Lackes mit dem im Handel erhältlichen Prägegerät «Dymo Mite» Tapewriter® Modell 2 der Fa. Dymo Industries Inc., Berkeley, Calif., USA, stets in gleicher Weise sowohl mit 13 mm als auch mit 4,5 mm hohen Buchstaben oder Zahlen versehen. Die Ermittlung des Kontrastwertes erfolgte visuell durch Betrachtung der geprägten Streifen und gegenseitigen Vergleich des Weissbruchs der Prägungen. Dabei erfolgte eine Benotung mit den Zahlen 0, 1, 2, 3 und 4, wobei die Note 0 besagt, dass der Streifen (Folie) keinen nennenswerten Weissbruch, und die Note 4, dass er einen sehr starken Weissbruch aufweist.

2. Weissbruchradius (in mm): Von den Folien wurden Streifen von etwa 15 mm Breite und etwa 250 mm Länge abgeschnitten. Diese Streifen wurden zu einer Schlaufe zusammengebogen und mit dem Schlaufenende voraus durch einen Spalt mit einer lichten Weite von 0,650 mm gezogen. Der Spalt wurde durch zwei (runde) Drahtstücke von 17 mm Länge und 2 mm Durchmesser, die an den beiden Enden parallel zueinander liegend befestigt sind, gebildet. Beim Durchziehen der Schlaufe durch den Spalt verringerte sich der Radius der Schlaufe stetig: Als Weissbruchradius wurde der Radius in Millimeter gemessen, bei dem während des Durchziehens das Auftreten von Weissbruch beobachtet wurde (der Radius kann mit einer Schieblehre, einem Spion oder auf optischem Wege gemessen werden).

3. Wärmebeständigkeit (in °C): Von den Folien wurden etwa 12 mm breite und etwa 100 mm lange Streifen abgeschnitten. In diese Streifen wurden mit Hilfe des obengenannten Prägegerätes in stets gleicher Weise 4,5 mm hohe Buchstaben eingeprägt. Zur Ermittlung der Wärmebeständigkeit dieser Prägungen wurden die Streifen auf die elektrischen Heizplatte eines Mikroskopes gelegt und es wurde die Änderung des Weissbruches bei fortlaufender Temperaturerhöhung von 1 °C pro Minute, beginnend mit 25 °C, beobachtet. Diejenige Temperatur, bei der die durch das Mikroskop beobachtete Weissfärbung der Buchstaben gänzlich verschwand, ist als Wert der Wärmebeständigkeit des Weissbruches notiert worden.

4. Trübungszahl (in %): Die Messung der Trübungszahl der Folien (die entweder unmittelbar nach der Herstellung oder nach mehr oder weniger langer Lagerung bei Raumtemperatur und einer normalen relativen Luftfeuchtigkeit zur Messung eingesetzt wurden) erfolgte nach ASTM D 1003-61 Standard Test Method for Haze and Luminous Transmittance of Transparent Plastics.

5. Trübungszahl nach einer 8 Tage dauernden Lagerung der Folien bei 65 °C und 95% relativer Luftfeuchtigkeit (in %): Folienproben wurden zunächst in einem Klimaschrank bei 65 °C und 95% relativer Luftfeuchtigkeit 8 Tage lang freihängend gelagert. Unmittelbar nach der Entnahme aus dem Klimaschrank wurde die Trübungszahl dieser Folienproben, wie unter Punkt 4 angegeben, gemessen.

6. Zugfestigkeit (in $N/mm^2$): Die Messung der Zugfestigkeit der Folien erfolgte nach DIN 53 455.

7. Schlagzugfähigkeit (in $kJ/m^2$): Die Messung der Schlagzugzähigkeit der Folien erfolgte nach DIN 53 448.

8. Elastizität (in $N/mm^2$):
Es wurde der Elastizitätsmodul der Folien nach DIN 53 457 gemessen.

9. Steifigkeit (in N · mm): Die Steifigkeit der Folie entspricht ihrem Widerstand gegenüber einer Biegebeanspruchung; dieser Widerstand wird ausgedrückt durch den Steifigkeitsmodul. Die Messung der Steifigkeit der Folien erfolgte nach DIN 53 121. Die Steifigkeit ist proportional dem Elastizitäsmodul mal der dritten Potenz der Dicke der Folie.

Die Messungen 2 und 6 bis 9 wurden mit Folienstücken durchgeführt, die sowohl aus der Längsrichtung (1) als auch aus der Querrichtung (q) der Folie stammten (die Längsrichtung ist die Richtung des Materiallaufes bei der Herstellung der Folie und die Querrichtung die Richtung senkrecht dazu).

Vergleichsbeispiele

Beispiel 1

| | |
|---|---|
| 78,0 Gew.-% | Vinylchlorid (VC)-Homopolymerisat vom K-Wert 60, hergestellt nach dem Masse-Polymerisationsverfahren |
| 15,0 Gew.-% | MBS-Polymeres aus 49,0 Gew.-% Methylmethacrylat, 37,0 Gew.-% Butadien und 14,0 Gew.-% Styrol |
| 1,4 Gew.-% | Octylzinn-Stabilisator |
| 5,0 Gew.-% | Dicotylphthalat |
| 0,6 Gew.-% | Gleitmittel |

Beispiel 2

| | |
|---|---|
| 93,0 Gew.-% | VC-Polymerisat gemäss Beispiel 1 |
| 1,4 Gew.-% | Octylzinn-Stabilisator |
| 5,0 Gew.-% | Dioctylphthalat |
| 0,6 Gew.-% | Gleitmittel |

Beispiel 3

| | |
|---|---|
| 78,0 Gew.-% | VC-Polymerisat gemäss Beispiel 1 |
| 7,5 Gew.-% | MBS-Polymeres aus 49,0 Gew.-% Methylmethacrylat 37,0 Gew.-% Butadien und 14,0 Gew.-% Styrol |
| 7,5 Gew.-% | ABS-Polymeres aus 17,0 Gew.-% Acrylnitril, 48,0 Gew.-% Butadien und 35,0 Gew.-% Styrol |

Beispiel 3 (Fortsetzung)

1,4 Gew.-% Octylzinn-Stabilisator
5,0 Gew.-% Dioctylphthalat
0,6 Gew.-% Gleitmittel

Beispiel 4
96,0 Gew.-% VC-Polymerisat gemäss Beispiel 1
1,0 Gew.-% Polymethylmethacrylat
1,5 Gew.-% Octylzinn-Stabilisator
1,5 Gew.-% Gleitmittel

Erfindungsgemässe Beispiele
Beispiel 5
96,85 Gew.-% VC-Homopolymerisat vom K-Wert 60, hergestellt nach dem Suspensions-Polymerisationsverfahren
1,5 Gew.-% Octylzinn-Stabilisator
1,5 Gew.-% Gleitmittel
0,15 Gew.-% Polyorganosiloxan B 1

Beispiel 6
95,25 Gew.-% VC-Homopolymerisat vom K-Wert 55, hergestellt nach dem Suspensions-Polymerisationsverfahren
2,0 Gew.-% MBS-Polymeres gemäss Beispiel 1
0,5 Gew.-% Polymethylmethacrylat
1,5 Gew.-% Butylzinn-Stabilisator
0,6 Gew.-% Gleitmittel
0,15 Gew.-% Polyorganosiloxan B 1

Beispiel 7
94,55 Gew.-% VC-Homopolymerisat vom K-Wert 57, hergestellt nach dem Masse-Polymerisationsverfahren
2,0 Gew.-% ABS-Polymeres gemäss Beispiel 3
0,5 Gew.-% Copolymerisat aus 45,0 Gew.-% Methylmethacrylat und 55,0 Gew.-% Styrol
1,5 Gew.-% Butylzinn-Stabilisator
1,3 Gew.-% Gleitmittel
0,15 Gew.-% Polyorganosiloxan B 1

Beispiel 8
86,93 Gew.-% VC-Polymerisat gemäss Beispiel 7
5,0 Gew.-% MBS-Polymeres gemäss Beispiel 1
5,0 Gew.-% ABS-Polymeres gemäss Beispiel 3
1,5 Gew.-% Octylzinn-Stabilisator
1,5 Gew.-% Gleitmittel
0,07 Gew.-% Polyorganosiloxan B 1

Beispiel 9
85,2 Gew.-% VC-Polymerisat gemäss Beispiel 7
10,0 Gew.-% MBS-Polymeres gemäss Beispiel 1
0,5 Gew.-% Polymethylmethacrylat
1,5 Gew.-% Octylzinn-Stabilisator
1,5 Gew.-% Gleitmittel
1,3 Gew.-% Polyorganosiloxan B 1

Beispiel 10
86,35 Gew.-% VC-Polymerisat gemäss Beispiel 5
10,0 Gew.-% ABS-Polymeres gemäss Beispiel 3
0,5 Gew.-% Polymethylmethacrylat
1,5 Gew.-% Methylzinn-Stabilisator
1,5 Gew.-% Gleitmittel
0,15 Gew.-% Polyorganosiloxan B 1

Beispiel 11
65,5 Gew.-% VC-Polymerisat gemäss Beispiel 1
20,0 Gew.-% VC-Copolymerisat mit 10,0 Gew.-% Vinylacetat, hergestellt nach dem Suspensionspolymerisationsverfahren
5,0 Gew.-% MBS-Polymeres gemäss Beispiel 1
5,0 Gew.-% ABS-Polymeres gemäss Beispiel 3
0,5 Gew.-% Polymethylmethacrylat
1,5 Gew.-% Methylzinn-Stabilisator
1,5 Gew.-% Gleitmittel
1,0 Gew.-% Polyorganosiloxan B 2

Beispiel 12
86,0 Gew.-% VC-Polymerisat gemäss Beispiel 1
5,0 Gew.-% MBS-Polymeres gemäss Beispiel 1
5,0 Gew.-% ABS-Polymeres gemäss Beispiel 3
1,5 Gew.-% Octylzinn-Stabilisator
1,5 Gew.-% Gleitmittel
1,0 Gew.-% Polyorganosiloxan B 3

Beispiel 13
86,35 Gew.-% VC-Polymerisat gemäss Beispiel 1
5,0 Gew.-% MBS-Polymeres gemäss Beispiel 1
5,0 Gew.-% ABS-Polymeres gemäss Beispiel 3
0,5 Gew.-% Polymethylmethacrylat
1,5 Gew.-% Octylzinn-Stabilisator
1,5 Gew.-% Gleitmittel
0,15 Gew.-% Polyorganosiloxan B 4

Beispiel 14
67,75 Gew.-% VC-Polymerisat gemäss Beispiel 1
20,0 Gew.-% VC-Emulsions-Pfropfpolymerisat mit 7,0 Gew.-% (bezogen auf das VC-Emulsionspolymerisat) von einem elastomeren EmulsionsCopolymerisat aus 90,0 Gew.-% Butadien und 10,0 Gew.-% Acrylnitril
5,0 Gew.-% MBS-Polymeres gemäss Beispiel 1
5,0 Gew.-% ABS-Polymeres gemäss Beispiel 3
1,5 Gew.-% Octylzinn-Stabilisator
0,6 Gew.-% Gleitmittel
0,15 Gew.-% Polyorganosiloxan B 5

Beispiel 15
85,7 Gew.-% VC-Polymerisat gemäss Beispiel 1
5,0 Gew.-% MBS-Polymeres gemäss Beispiel 1
5,0 Gew.-% ABS-Polymeres gemäss Beispiel 3

Beispiel 15 (Fortsetzung)

0,5 Gew.-% Copolymerisat aus 45,0 Gew.-% Methylmethacrylat und 55,0 Gew.-% Styrol
1,5 Gew.-% Octylzinn-Stabilisator
1,5 Gew.-% Gleitmittel
0,8 Gew.% Polyorganosiloxan B 6

Beispiel 16

86,85 Gew.-% VC-Polymerisat gemäss Beispiel 1
5,0 Gew.-% MBS-Polymeres gemäss Beispiel 1
5,0 Gew.-% ABS-Polymeres gemäss Beispiel 3
1,5 Gew.-% Octylzinn-Stabilisotor
1,5 Gew.-% Gleitmittel
0,15 Gew.-% Polyorganosiloxan B 7

Beispiel 17

86,35 Gew.-% VC-Polymerisat gemäss Beispiel 1
5,0 Gew.-% MBS-Polymeres gemäss Beispiel 1
5,0 Gew.-% ABS-Polymeres gemäss Beispiel 3
0,5 Gew.-% Polymethylmethacrylat
1,5 Gew.-% Octylzinn-Stabilisator
1,5 Gew.-% Gleitmittel
0,15 Gew.-% Polyorganosiloxan B 8

In der nachstehenden Tabelle II sind die Messergebnisse bei den Folien aus den Beispielen zusammengefasst. Sie beweisen die oben dargelegten vorteilhaften Eigenschaften der erfindungsgemäss einzusetzenden Formmasssen beziehungsweise Formkörper.

Tabelle I

Polyorganosiloxan

| Beispiel Nr. | Kurzbezeichnung | Chemische Beschreibung; die Bedeutung von R · $R^2$ und $R^3$ in Formel I und II: $R^1$ | $R^2$ | $R^3$ | Eigenschaften: Viskosität bei 25 °C ($mm^2/s$) | Brechungsindex bei 25 °C | Dichte bei 25 °C ($g/cm^3$) | Flüchtigkeit, Gewichtsverlust (Gew.-%) |
|---|---|---|---|---|---|---|---|---|
| 5 bis 10 | B 1 | – | Phenyl oder Chlorphenyl | Methyl | 500 | 1,470 | 1,150 | < 1% bei 230 °C, 15 min |
| 11 | B 2 | – | Methyl oder Phenyl | Methyl | 20 | 1,440 | 1,010 | |
| 12 | B 3 | – | Methyl | Methyl | 4850 | 1,403 | 0,970 | < 1,5% bei 230 °C, 15 min |
| 13 | B 4 | – | Methyl | Methyl | 490 000 | 1,404 | 0,980 | < 0,5% bei 230 °C, 15 min |
| 14 | B 5 | – | Methyl, eine glykolfunktionelle Gruppe als Endgruppe | Methyl | 2000 | 1,445 | 1,040 | < 1,5% bei 230 °C, 15 min |
| 15 | B 6 | – | Methyl, eine aminofunktionelle Gruppe als Endgruppe | Methyl | 40 | 1,423 | 1,015 | < 1,5% bei 230 °C, 15 min (die Aminzahl ist 2,7) |
| 16 | B 7 | – | Methyl, Decyl oder Alkaryl | Methyl | 1500 | 1,465 | 0,910 | < 2% bei 230 °C, 15 min |
| 17 | B 8 | Methyl (b in Formel 1 ist 1) | ---- | --- | der Schmelzpunkt liegt im Temperaturbereich 60 bis 80 °C | | | |

Tabelle II

Werte der Eigenschaften Nr. 1 bis 9 der Folien gemäss den Beispielen

| Beispiel Nr. | 1 | 2 (mm) | | 3 (°C) | 4 (%) | 5 (%) | 6 ($N/mm^2$) | | 7 ($kJ/m^2$) | | 8 ($N/mm^2$) | | 9 (N · mm) | |
|---|---|---|---|---|---|---|---|---|---|---|---|---|---|---|
| | | 1 | q | | | | 1 | q | 1 | q | 1 | q | 1 | 1 |
| 1 | 3 | 1,5 | 1,5 | 77 | 15 | 40 | 46 | 46 | 443 | 523 | 2434 | 2506 | 1,02 | 0,94 |
| 2 | 0 | < 1 | < 1 | 71 | 6 | 52 | 53 | 58 | 228 | 261 | 3166 | 3010 | 1,34 | 1,36 |
| 3 | 2 | 1,5 | 1,5 | 77 | 23 | 40 | 46 | 44 | 625 | 421 | 2313 | 2222 | 0,90 | 0,89 |
| 4 | 0 | < 1 | < 1 | 77 | 16 | 44 | 56 | 56 | 603 | 421 | 2868 | 2794 | 1,16 | 1,19 |
| 5 | 3 | 1,5 | 1,5 | 80 | 10 | 35 | 55 | 54 | 623 | 518 | 2892 | 2960 | 1,16 | 1,13 |
| 6 | 3 | 1,5 | 1,75 | 80 | 11 | 32 | 53 | 52 | 565 | 409 | 2901 | 2838 | 1,20 | 1,29 |
| 7 | 3 | 1,5 | 1,75 | 82 | 12 | 32 | 52 | 52 | 406 | 515 | 2917 | 3064 | 1,19 | 1,23 |
| 8 | 4 | 2,0 | 2,5 | 85 | 15 | 31 | 46 | 43 | 543 | 649 | 2640 | 2569 | 1,10 | 1,09 |
| 9 | 4 | 2,5 | 2,5 | 83 | 10 | 30 | 48 | 45 | 679 | 728 | 2636 | 2600 | 1,12 | 1,09 |
| 10 | 4 | 2,5 | 3,0 | 86 | 17 | 30 | 46 | 45 | 740 | 798 | 2565 | 2686 | 1,19 | 1,10 |
| 11 | 4 | 2,5 | 3,0 | 85 | 14 | 29 | 44 | 46 | 689 | 713 | 2636 | 2600 | 1,13 | 1,07 |
| 12 | 4 | 2,0 | 2,75 | 84 | 16 | 31 | 47 | 45 | 818 | 736 | 2704 | 2636 | 1,10 | 1,08 |
| 13 | 4 | 2,5 | 3,0 | 83 | 17 | 31 | 46 | 45 | 899 | 803 | 2829 | 2631 | 1,08 | 1,06 |
| 14 | 4 | 2,75 | 3,0 | 86 | 15 | 30 | 47 | 46 | 738 | 812 | 2791 | 2801 | 1,18 | 1,09 |
| 15 | 4 | 2,5 | 2,75 | 85 | 15 | 30 | 46 | 44 | 693 | 792 | 2829 | 2631 | 1,12 | 1,06 |
| 16 | 4 | 2,5 | 2,75 | 84 | 16 | 30 | 46 | 46 | 784 | 803 | 2600 | 2704 | 1,09 | 1,05 |
| 17 | 4 | 2,75 | 3,0 | 83 | 16 | 32 | 46 | 45 | 615 | 700 | 2734 | 2621 | 1,11 | 1,08 |

## Patentansprüche

1. Verfahren zur Herstellung von Prägungen mit einem hohen und temperaturbeständigen Weissbruch in einer Folie auf der Basis von Vinylchloridpolymerisaten durch Deformation der Folie, dadurch gekennzeichnet, dass eine solche Folie eingesetzt wird, die aus einer Formmasse, bestehend im wesentlichen aus

A) mindestens einem Vinylchloridpolymerisat als Hauptbestandteil, und

B) mindestens einem festen Polyorganosiloxan, das einen Schmelzpunkt von nicht über 200 °C besitzt, und/oder mindestens einem flüssigen Polyorganosiloxan, das eine als Gewichtsverlust angegebene Flüchtigkeit von nicht mehr als 2,5 Gew.-% nach einem 15 Minuten langen Erhitzen bei 230 °C und Normaldruck besitzt, wobei die Menge der Komponente B) 0,05 bis 1,5 Gew.-%, bezogen auf das Gesamtgewicht der Formmasse, beträgt, gebildet worden ist.

2. Verfahren nach Anspruch 1, dadurch gekennzeichnet, dass das feste Polyorganosiloxan einen Schmelzpunkt im Temperaturbereich von 60 bis 160 °C, und das flüssige Polyorganosiloxan eine Flüchtigkeit von nicht mehr als 2,0 Gew.-% besitzt.

3. Verfahren nach Anspruch 1, dadurch gekennzeichnet, dass das feste Polyorganosiloxan einen Schmelzpunkt im Temperaturbereich von 80 bis 140 °C und das flüssige Polyorganosiloxan eine Flüchtigkeit von nicht mehr als 1,5 Gew.-% besitzt.

4. Verfahren nach Anspruch 1, 2 oder 3, dadurch gekennzeichnet, dass das flüssige Polyorganosiloxan die weiteren folgenden Eigenschaften besitzt: einen Brechungsindex bei 25 °C von 1,375 bis 1,500, eine Dichte bei 25 °C von 0,760 bis 1,150 g/cm$^3$, und eine Viskosität bei 25 °C von 0,5 bis 500 000 mm$^2$/s.

5. Verfahren nach Anspruch 4, dadurch gekennzeichnet, dass das flüssige Polyorganosiloxan eine Viskosität bei 25 °C von 10 bis 50 000 mm$^2$/s besitzt.

6. Verfahren nach Anspruch 1, dadurch gekennzeichnet, dass die Formmasse zusätzlich C) mindestens ein Elastomeres in einer Menge von 1 bis 20 Gew.-%, bezogen auf das Gesamtgewicht der Formmasse, enthält.

7. Verfahren nach Anspruch 6, dadurch gekennzeichnet, dass die Formmasse das Elastomere in einer Menge von 2 bis 11 Gew.-% enthält.

8. Verfahren nach Anspruch 6 oder 7, dadurch gekennzeichnet, dass das Elastomere ausgewählt ist aus der Gruppe der Acrylnitril-Butadien-Styrol-, Methylmethacrylat-Butadien-Styrol-, Methylmethacrylat -Acrylnitril-Butadien-Styrol-, Methylmethacrylat-Styrol-, Styrol-Butadien-Styrol- und Methylmethacrylat-Polymeren.

9. Verfahren nach Anspruch 1, dadurch gekennzeichnet, dass die Formmasse im wesentlichen besteht aus

A) 73,0 Gew.-% bis 98,35 Gew.-% von mindestens einem Vinylchloridpolymerisat,

B) 0,05 Gew.-% bis 1,5 Gew.-% von mindestens einem festen und/oder flüssigen Polyorganosiloxan,

C) 1 bis 20 Gew.-% von mindestens einem Elastomeren aus der Gruppe der Acrylnitril-Butadien-Styrol-, Methylmethacrylat-Butadien-Styrol-, Methylmethacrylat-Acrylnitril-Butadien-Styrol-, Methylmethacrylat-Styrol- und Methylmethacrylat-Polymeren,

D) 0,5 bis 3,0 Gew.-% von mindestens einem Wärmestabilisator für Vinylchloridpolymerisate, und

E) 0,1 bis 2,5 Gew.-% von mindestens einem Gleitmittel für Vinylchloridpolymerisate, Gewichtsprozent jeweils bezogen auf das Gesamtgewicht der Formmasse.

10. Verfahren nach Anspruch 9, dadurch gekennzeichnet, dass die Formmasse die Komponenten in den folgenden Mengen enthält:
A) 83,5 bis 96,6 Gew.-%
B) 0,1 bis 1,0 Gew.-%
C) 2,0 bis 11,0 Gew.-%
D) 0,8 bis 2,0 Gew.-%
E) 0,5 bis 1,5 Gew.-%.

## Revendications

1. Procédé pour créer des empreintes présentant une rupture blanche prononcée et stable à la chaleur, sur une feuille à base de polymères du chlorure de vinyle, par déformation de la feuille, procédé caractérisé en ce qu'on utilise une feuille qui a été fabriquée à partir d'une matière à mouler essentiellement constituée:

A) d'au moins un polymère de chlorure de vinyle, en tant que constituant principal, et

B) d'au moins un poly-organosiloxane solide dont le point de fusion n'est pas supérieur à 200 °C, et/ou d'au moins un poly-organosiloxane liquide qui a une volatilité, exprimée par la perte de poids, au plus égale à 2,5 % en poids après un chauffage de 15 minutes à 230 °C sous la pression normale, la quantité de la composante (B) représentant de 0,05 à 1,5 % en poids par rapport au poids total de la matière à mouler.

2. Procédé selon la revendication 1 caractérisé en ce que le poly-organosiloxane solide a un point de fusion situé dans l'intervalle allant de 60 à 160 °C, et le poly-organosiloxane liquide a une volatilité d'au plus 0,2 % en poids.

3. Procédé selon la revendication 1 caractérisé en ce que le poly-organosiloxane solide a un point de fusion situé dans l'intervalle de température allant de 80 à 140 °C et le poly-organosiloxane liquide a une volatilité d'au plus 1,5 % en poids.

4. Procédé selon l'une quelconque des revendications 1, 2 et 3, procédé caractérisé en ce que le poly-organosiloxane liquide a en outre les propriétés suivantes:

– un indice de réfraction à 25 °C compris entre 1,375 et 1,500,

– une masse volumique à 25 °C comprise entre 0,760 et 1,150 g/cm$^3$ et

– une viscosité à 25 °C comprise entre 0,5 et 500 000 mm$^2$/s.

5. Procédé selon la revendication 4 caractérisé

en ce que le poly-organosiloxane liquide a une viscosité à 25 °C comprise entre 10 et 50 000 $mm^2/s$.

6. Procédé selon la revendication 1 caractérisé en ce que la matière à mouler contient en outre: C) au moins un élastomère en une quantité de 1 à 20 % en poids par rapport au poids total de la matière à mouler.

7. Procédé selon la revendication 6 caractérisé en ce que la matière à mouler contient l'élastomère en une quantité de 2 à 11 % en poids.

8. Procédé selon l'une des revendications 6 et 7, caractérisé en ce que l'élastomère est choisi dans l'ensemble constitué par les polymères acrylonitrile/butadiène/styrène, méthacrylate de méthyle/butadiène/styrène, méthacrylate de méthyle/acrylonitrile/ butadiène/ styrène, méthacrylate de méthyle /styrène et styrène/butadiène/styrène et les polymères du méthacrylate de méthyle.

9. Procédé selon la revendication 1 caractérisé en ce que la matière à mouler est essentiellement constituée:

A) de 73,0 % en poids à 98,35 % en poids d'au moins un polymère du chlorure de vinyle,

B) de 0,05 % en poids à 1,5 % en poids d'au moins un polyorganosiloxane solide et/ou liquide,

C) de 1 à 20 % en poids d'au moins un élastomère pris dans l'ensemble constitué par les polymères acrylonitrile butadiène/styrène, méthacrylate de méthyle/ butadiène/ styrène, méthacrylate de méthyle/ acrylonitrile/ butadiène/ styrène et méthacrylate de méthylé/ styrène et les polymères du méthacrylate de méthyle,

D) de 0,5 à 3,0 % en poids d'au moins un stabilisant à la chaleur pour les polymères du chlorure de vinyle, et

E) de 0,1 à 2,5 % en poids d'au moins un lubrifiant pour les polymères du chlorure de vinyle, les pourcentages indiqués étant à chaque fois rapportés au poids total de la matière à mouler.

10. Procédé selon la revendication 9 caractérisé en ce que la matière à mouler contient les composantes en les quantités suivantes:

A) de 83,5 à 96,6 % en poids,
B) de 0,1 à 1,0 % en poids,
C) de 2,0 à 11,0 % en poids,
D) de 0,8 à 2,0 % en poids et
E) de 0,5 à 1,5 % en poids.

## Claims

1. A process for producing embossments with a high and a heat stable whitefracture in a sheet based on vinyl chloride polymers by deformation of the sheet, characterised in that a sheet is used which was formed from a molding composition consisting essentially of

A) at least one vinyl chloridepolymer as the main constituent, and

B) at least one solid polyorganosiloxane which has a melting point of not greater than 200 °C, and/or at least one liquid polyorganosiloxane which has a volatility, given as weight loss, of not more than 2.5% by weight after being heated at 230 °C under normal pressure for 15 minutes, the amount of component B) being 0.05 to 1.5% by weight, relative to the total weight of the molding composition.

2. The process of claim 1 wherein the solid polyorganosiloxane has a melting point in the temperature range from 60 to 160 °C and the liquid polyorganosiloxane has a volatility of not more than 2.0 % by weight.

3. The process of claim 1 wherein the solid polyorganosiloxane has a melting point in the temperature range from 80 to 140 °C and the liquid polyorganosiloxane has a volatility of not more than 1.5 % by weight.

4. The process of claim 1, 2, or 3 wherein the liquid polyorganosiloxane has additionally the following properties: A refractive index at 25 °C of 1.375 to 1.500, a density at 25 °C of 0.760 to 1.150 $g/cm^3$ and a viscosity at 25 °C of 0.5 to 500,000 $mm^2/s$.

5. The process of claim 4 wherein the liquid polyorganosiloxane has a viscosity at 25 °C of 10 to 50,000 $mm^2/s$.

6. The process of claim 1 wherein the molding composition additionally contains C) at least one elastomer in an amount of 1 to 20% by weight, relative to the total weight of the molding composition.

7. The process of claim 6 wherein the elastomer is present in an amount of 2 to 11% by weight.

8. The process of claims 6 or 7 wherein the elastomer is selected from the group consisting of acrylonitrile-butadiene-styrene-, methylmethacrylate-butadiene-styrene-, methylmethacrylateacrylonitrile-butadiene-styrene-, methylmethacrylate-styrene-, styrene-butadiene-styrene- and methylmethacrylate polymers.

9. The process of claim 1 wherein the molding composition consists essentially of

A) 73.0 % by weight to 98.35 % by weight of at least one vinyl chloride polymer,

B) 0.05 % by weight to 1.5 % by weight of at least one solid and/or liquid polyorganosiloxane,

C) 1 to 20 % by weight of a least one elastomer selected from the group consisting of acrylonitrile-butadiene-styrene-, methylmethacrylate-butadiene-styrene-, methylmethacrylate-acrylonitrile-butadiene-styrene-, methylmethacrylate-styrene- and methylmethacrylate polymers

D) 0.5 to 3.0% by weight of at least one heat stabilizer for vinyl chloride polymers, and

E) 0.1 to 2.5 % by weight of at least one lubricant for vinyl chloride polymers, the percentages by weight in each case being relative to the total weight of the molding composition.

10. The process of claim 9 wherein A) is present in an amount of 83.5 to 96.6 % by weight, B) is present in an amount of 0.1 to 1.0 % by weight, C) is present in an amount of 2.0 to 11.0 % by weight, D) is present in an amount of 0.8 to 2.0 % by weight and E) is present in an amount of 0.5 to 1.5% by weight.